# EUROPEAN PATENT SPECIFICATION

(11) **EP 2 695 315 B1**
(45) Date of publication and mention of the grant of the patent: **15.03.2017**
(21) Application number: 12764585.1
(22) Date of filing: 28.03.2012
(51) Int. Cl.: H04W 68/00, H04W 4/00

(54) **TECHNIQUES TO CONTROL PAGING FOR FIXED DEVICES**
VERFAHREN ZUR PAGING-STEUERUNG FÜR STATIONÄRE VORRICHTUNGEN
PROCÉDÉS DE CONTRÔLE DE RADIOMESSAGERIE POUR DES DISPOSITIFS FIXES

(30) Priority: 01.04.2011 US 201161471042 P
(43) Date of publication of application: 12.02.2014
(73) Proprietor: Intel Corporation, Santa Clara, CA 95054 (US)
(72) Inventor: GUPTA, Maruti, Portland, Oregon 97219 (US); VANNITHAMBY, Rath, Portland, Oregon 97229 (US); KOC, Ali, Hillsboro, Oregon 97124 (US); ZHU, Jing, Portland, Oregon 97229 (US)
(74) Representative: Jennings, Vincent Louis
(86) International application number: PCT/US2012/030833
(87) International publication number: WO 2012/135275

(56) References cited:
- US-A1- 2008 220 769
- US-A1- 2010 057 485
- US-A1- 2010 279 676
- GIWON PARK ET AL: "Reply contribution on C80216p-11/0002 (Location update) ; C80216p-11_0036", IEEE DRAFT; C80216P-11_0036, IEEE-SA, PISCATAWAY, NJ USA, vol. 802.16p, 13 March 2011 (2011-03-13), pages 1-4, XP017780572, [retrieved on 2011-03-13]
- "IEEE 802.16p Machine to Machine (M2M) System Requirements Document (SRD) (initial working document revised)", , 13 January 2011 (2011-01-13), XP055163461, Retrieved from the Internet: URL:http://ieee802.org/16/m2m/docs/80216p- 10_0004r2.doc [retrieved on 2015-01-20]
- "DRAFT Amendment to IEEE Standard for Local and metropolitan area networks Part 16: Air Interface for Broadband Wireless Access Systems ; P80216m_D12", IEEE DRAFT; P80216M_D12, IEEE-SA, PISCATAWAY, NJ USA, vol. 802.16, no. D12, 18 February 2011 (2011-02-18), pages 1-1120, XP068048140, [retrieved on 2011-02-18]
- RITESH KUMAR KALLE ET AL: "Optimizing Location update for stationary M2M devices ; C80216p-11_0010", IEEE DRAFT; C80216P-11_0010, IEEE-SA, PISCATAWAY, NJ USA, vol. 802.16p, 5 March 2011 (2011-03-05), pages 1-4, XP017780525, [retrieved on 2011-03-05]
- JIN LEE ET AL: "Small Data Transmission for fixed M2M devices in idle mode ; C80216p-11_0031", IEEE DRAFT; C80216P-11_0031, IEEE-SA, PISCATAWAY, NJ USA, vol. 802.16p, 6 March 2011 (2011-03-06), pages 1-4, XP017780547, [retrieved on 2011-03-07]

## Description

### BACKGROUND

Mobile broadband networks currently service various types of devices, including fixed devices and mobile devices. A fixed device is a device that does not change position over time, while a mobile device does change position over time. Currently, a majority of devices populating mobile broadband networks are mobile devices. As such, mobile broadband networks are optimized to provide services to mobile devices, such as location services, paging services, hand-off services between cells, and so forth.

Machine to Machine (M2M) communications is emerging as a dynamic technology enabling an "Internet of things" to exchange information without human interaction. Recent trends predict an exponential increase in a number of M2M devices in a mobile broadband network. Further, it is expected that a major portion of these M2M devices will be fixed devices of the type used as parking meters, surveillance cameras, utility meters, and other non-mobile applications. Mobile broadband networks optimized for mobile devices, however, may not efficiently service such a large number of fixed devices. It is with respect to these and other considerations that the present improvements have been needed.

Reference is made to IEE DRAFT; C80216P-11_0036; IEEE-SA, PISCATAWAY, NJ USA, vol. 802. 16p, 13 March 2011 (2011-03-13), pages 1-4. This document discloses modifying the location update procedure of a fixed M2M device.

### BRIEF DESCRIPTION OF THE DRAWINGS

**FIG. 1** illustrates an embodiment of an apparatus.
**FIG. 2** illustrates an embodiment of a first logic flow.
**FIG. 3** illustrates an embodiment of a second logic flow.
**FIG. 4** illustrates an embodiment of a third logic flow.
**FIG. 5** illustrates an embodiment of a fourth logic flow.
**FIG. 6** illustrates an embodiment of a packet for the apparatus.
**FIG. 7** illustrates an embodiment of a storage medium.
**FIG. 8** illustrates an embodiment of a communications architecture.
**FIG. 9** illustrates an embodiment of a computing architecture.
**FIG. 10** illustrates an embodiment of a communications system.

### DETAILED DESCRIPTION

Embodiments are generally directed to improvements for wireless mobile broadband technologies. Wireless mobile broadband technologies may include any wireless technologies suitable for use with M2M devices, such as one or more third generation (3G) or fourth generation (4G) wireless standards, revisions, progeny and variants. Examples of wireless mobile broadband technologies may include without limitation any of the Institute of Electrical and Electronics Engineers (IEEE) 802.16m and 802.16p standards, 3rd Generation Partnership Project (3GPP) Long Term Evolution (LTE) and LTE-Advanced (LTE ADV) standards, and International Mobile Telecommunications Advanced (IMT-ADV) standards, including their revisions, progeny and variants. Other suitable examples may include without limitation Global System for Mobile Communications (GSM)/Enhanced Data Rates for GSM Evolution (EDGE) technologies, Universal Mobile Telecommunications System (UMTS)/High Speed Packet Access (HSPA) technologies, Worldwide Interoperability for Microwave Access (WiMAX) or the WiMAX II technologies, Code Division Multiple Access (CDMA) 2000 system technologies (e.g., CDMA2000 1xRTT, CDMA2000 EV-DO, CDMA EV-DV, and so forth), High Performance Radio Metropolitan Area Network (HIPERMAN) technologies as defined by the European Telecommunications Standards Institute (ETSI) Broadband Radio Access Networks (BRAN), Wireless Broadband (WiBro) technologies, GSM with General Packet Radio Service (GPRS) system (GSM/GPRS) technologies, High Speed Downlink Packet Access (HSDPA) technologies, High Speed Orthogonal Frequency-Division Multiplexing (OFDM) Packet Access (HSOPA) technologies, HighSpeed Uplink Packet Access (HSUPA) system technologies, 3GPP Rel. 8 and 9 of LTE/System Architecture Evolution (SAE), and so forth. The embodiments are not limited in this context.

By way of example and not limitation, various embodiments may be described with specific reference to various 3GPP LTE and LTE ADV standards, such as the 3GPP LTE Evolved UMTS Terrestrial Radio Access Network (E-UTRAN), Universal Terrestrial Radio Access (E-UTRA) and LTE ADV Radio Technology 36 Series of Technical Specifications (collectively "3GPP LTE Specifications"), and IEEE 802.16 standards, such as the IEEE 802.16-2009 standard and current third revision to IEEE 802.16 referred to as "802.16Rev3" consolidating standards 802.16-2009, 802.16h-2010 and 802.16m-2011, and the IEEE 802.16p draft standards including IEEE P802.16.1b/D2 January 2012 titled "Draft Amendment to IEEE Standard for WirelessMAN-Advanced Air Interface for Broadband Wireless Access Systems, Enhancements to Support Machine-to-Machine Applications" (collectively "IEEE 802.16 Standards"), and any drafts, revisions or variants of the 3GPP LTE Specifications and the IEEE 802.16 Standards. Although some embodiments may be described as a 3GPP LTE Specifications or IEEE 802.16 Standards system by way of example and not limitation, it may be appreciated that other types of communications system may be implemented as various other types of mobile broadband communications systems and standards. The embodiments are not limited in this context.

Broadband wireless access technologies may differentiate fixed and mobile devices. Serving fixed devices in a network optimized for mobile devices is inefficient with respect to air interface signaling, device battery power, and capacity points of view. By differentiating between fixed and mobile devices, more efficient management of networks with large numbers of devices, such as M2M devices, may be achieved. For example, paging operations for a network may be customized for fixed devices, among other network and device operations.

Reference is now made to the drawings, wherein like reference numerals are used to refer to like elements throughout. In the following description, for purposes of explanation, numerous specific details are set forth in order to provide a thorough understanding thereof. It may be evident, however, that the novel embodiments can be practiced without these specific details. In other instances, well known structures and devices are shown in block diagram form in order to facilitate a description thereof. The intention is to cover all modifications, equivalents, and alternatives consistent with the claimed subject matter.

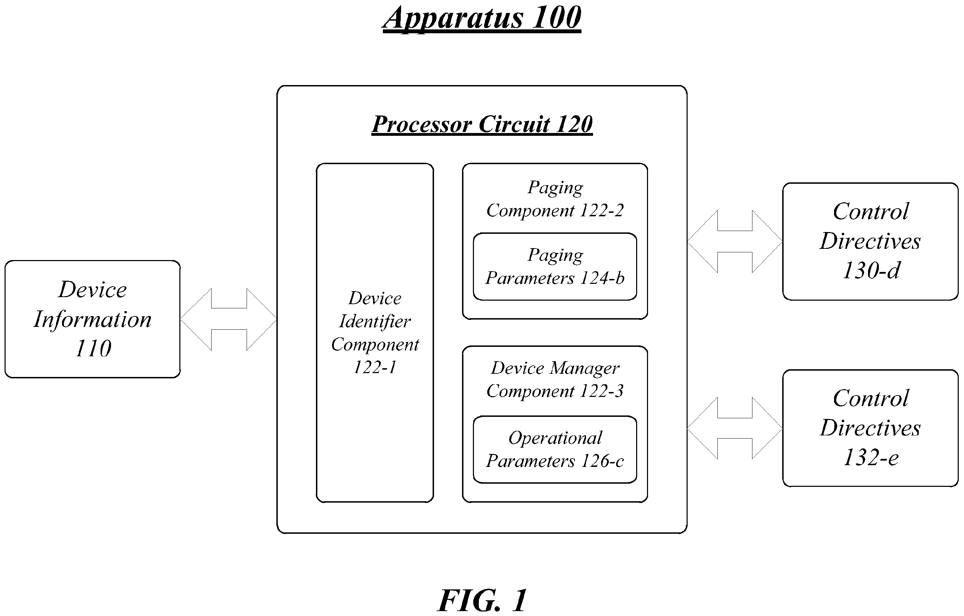

**FIG. 1** illustrates a block diagram for an apparatus 100. Although the apparatus 100 shown in FIG. 1 has a limited number of elements in a certain topology, it may be appreciated that the apparatus 100 may include more or less elements in alternate topologies as desired for a given implementation.

The apparatus 100 may comprise a computer-implemented apparatus 100 having a processor circuit 120 arranged to execute one or more software components 122-*a*. It is worthy to note that "*a*" and "*b*" and "*c*" and similar designators as used herein are intended to be variables representing any positive integer. Thus, for example, if an implementation sets a value for *a* = 5, then a complete set of software components 122-*a* may include components 122-1, 122-2, 122-3, 122-4 and 122-5. The embodiments are not limited in this context.

In one embodiment, the apparatus 100 may be implemented in any electronic device having wireless capabilities or equipment. In one embodiment, the apparatus 100 may be implemented in a fixed device. A fixed device generally refers to an electronic device designed to be in a fixed, stationary, permanent or otherwise non-moving position or location that does not vary over time. For instance, a fixed device may be installed with fixtures, attachments and housings to prohibit movement, including wired power lines, transmission lines, and so forth. By way of contrast, a mobile device is designed to be portable enough to be frequently moved between various locations over time. It may be appreciated that although a fixed device is generally stationary, some fixed devices may be disconnected from their current equipment in a first fixed location, moved to a second fixed location, and connected to equipment at the second fixed location.

One example of a fixed device is user equipment (UE) for a communications system or network, such as a communications device compliant with one or more 3GPP LTE Specifications or IEEE 802.16 Standards. For example, the apparatus 100 may be implemented as part of a M2M device compliant with one or more IEEE 802.16 Standards. Although some embodiments are described with reference to a M2M device or fixed M2M device, embodiments may utilize any user equipment for a communications system or network. The embodiments are not limited in this context.

Another example of a fixed device is system equipment, such as network equipment for a communications system or network compliant with one or more 3GPP LTE Specifications or IEEE 802.16 Standards. For example, the apparatus 100 may be implemented as part of a base station or eNodeB for a Wireless Metropolitan Area Network (WMAN) or LTE network, or other network devices. Although some embodiments are described with reference to a base station or eNodeB, embodiments may utilize any network equipment for a communications system or network. The embodiments are not limited in this context.

The apparatus 100 may comprise the processor circuit 120. The processor circuit 120 may be generally arranged to execute one or more software components 122-*a*. The processing circuit 120 can be any of various commercially available processors, including without limitation an AMD® Athlon®, Duron® and Opteron® processors; ARM® application, embedded and secure processors; IBM® and Motorola® DragonBall® and PowerPC® processors; IBM and Sony® Cell processors; Intel® Celeron®, Core (2) Duo®, Core i3, Core i5, Core i7, Itanium®, Pentium®, Xeon®, and XScale® processors; and similar processors. Dual microprocessors, multi-core processors, and other multi-processor architectures may also be employed as the processing unit 120.

The apparatus 100 may comprise a device identifier component 122-1. In one embodiment, the device identifier component 122-1 may be arranged for execution by the processor circuit 120 to generally determine whether a device is a fixed or mobile device. As previously described, a fixed device is a wireless device whose location does not change with time. There are a number of mechanisms that can be used to identify fixed, as opposed to mobile, devices. If the device location does not change with time, this indicates that the device is a fixed device. The device location can be derived from global positioning systems, indoor positioning, Global Navigation Satellite Systems (GNSS), and cellular triangulation, to mention a few examples. If the device location is checked a number of times and is still the same over sufficiently long time periods, the device can be identified as one that is a fixed device. A broadband wireless access network or a M2M server can obtain position information from the device in order to decide if it is a fixed device. Another way to identify fixed devices is based on the device function. If a device function is one that indicates that it is a fixed device, this notification can be provided to the global broadband network or machine-to-machine server. For example, a device that is a parking meter is known to be a fixed device. Conversely, a cellular telephone would be a function that would indicate that the device is not fixed. As another example, if the device has an onboard accelerometer, the output from the accelerometer can be identified to determine that the device is being used as a fixed device. Still another example is using the received signal strength or received power levels. If the received signal strength or received power level does not change by more than a threshold over a given time period, the device can be classified as being fixed. Other activities that can be monitored to determine whether a device moves include determining activities, such as manual inputs and periodic versus non-periodic activities, to mention a few examples. Still another possibility is that a M2M device knows that it is a fixed device and so notifies the network. The embodiments are not limited in this context.

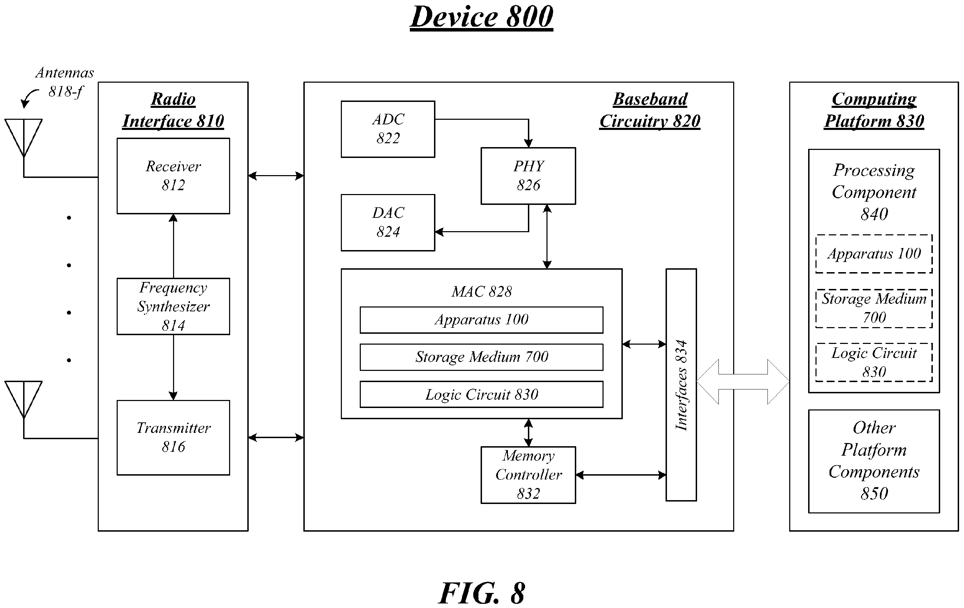

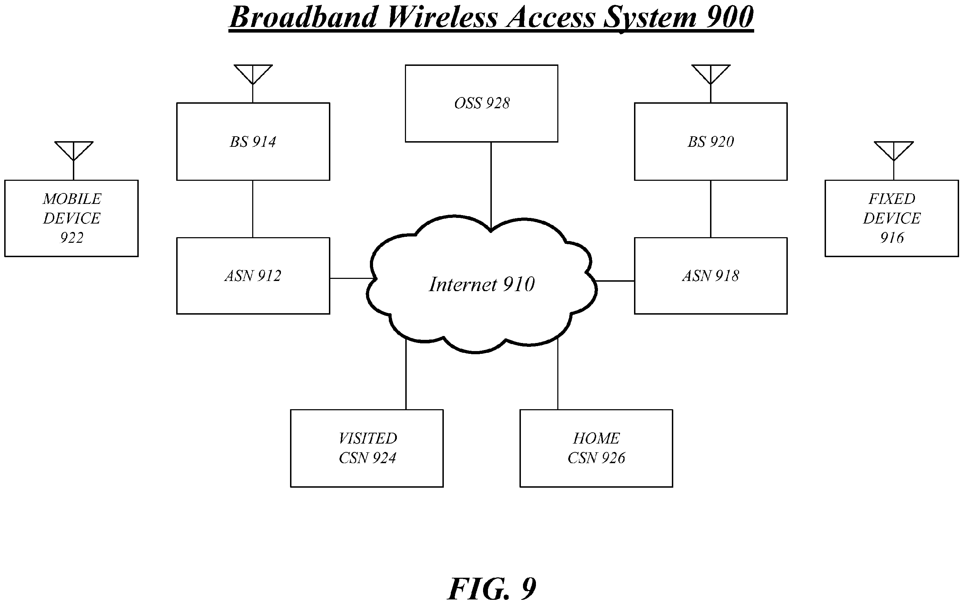

The apparatus 100 may comprise a paging component 122-2. In one embodiment, the paging component 122-2 may be arranged for execution by the processor circuit 120 to generally manage paging operations for a communications device or a communication system, examples of which are described with reference to FIGS. 8, 9, respectively. Every mobile broadband system has some kind of broadcast mechanism to distribute information to multiple devices. Paging is a broadcast service used to set up channels between a communication device and an access device for a radio access network. For example, in a 3GPP LTE network paging procedures are used to request establishment of a non-access stratum (NAS) signaling connection to the user equipment.

In various embodiments, paging operations may be differentiated based on whether a communications device is a fixed device or a mobile device. In this manner, paging operations may be customized for both types of devices, thereby resulting in more efficient use of device and system resources.

In one embodiment, the paging component 122-2 may receive an indication as to whether a device is a fixed or mobile device from the device identifier component 122-1. Alternatively, the paging component 122-2 may perform this determination.

The paging component 122-2 may generate one or more control directives 130-*d* to modify paging parameters 124-*b* when a device is indicted to be a fixed device. A paging parameter 124-*b* is a value, such as one or more bits stored in a memory unit (e.g., a register), associated with a defined paging function. A value may indicate whether a paging function is enabled or disabled. For example, a paging function may comprise a paging cycle, where a single bit set to a logical one (1) indicates the paging cycle is enabled and a logical zero (0) indicates the paging cycle is disabled. A value may also indicate an attribute or property for a paging function that, when enabled, controls operations of a paging function. For example, a paging cycle may have an attribute such as a defined length, where two bits provide 4 potential lengths for the paging cycle (e.g., bit values 00 = 5ms, 01=10ms, 10=15ms, 11=20ms). Paging parameters 124-*b* and associated paging functions may be stored in a data structure, such as a look-up table (LUT), for example. Examples of paging parameters 124-*b* may include without limitation a paging state parameter 124-1, a paging cycle parameter 124-2, a discontinuous paging reception parameter 124-3, a paging group parameter 124-4, a paging area parameter 124-5, a paging update parameter 124-6, and a paging identifier parameter 124-7. The embodiments are not limited to these examples.

The apparatus 100 may comprise a device manager component 122-3. In one embodiment, the device manager component 122-3 may be arranged for execution by the processor circuit 120 to manage various device operations for a communications device or a communication system, examples of which are described with reference to FIGS. 8, 9, respectively.

Additionally or alternatively to modifying paging operations, certain device operations may be differentiated based on whether a communications device is a fixed device or a mobile device. In this manner, paging operations and device operations may be customized for both types of devices, thereby resulting in more efficient use of device and system resources.

In one embodiment, the device manager component 122-3 may receive an indication as to whether a device is a fixed or mobile device from the device identifier component 122-1. Alternatively, the device manager component 122-3 may perform this determination.

The device manager component 122-3 may generate one or more control directives 132-*e* to modify operational parameters 126-*c* when a device is indicated to be a fixed device. Similar to a paging parameter 124-*b*, an operational parameter 126-*c* is a value, such as one or more bits stored in a memory unit (e.g., a register), associated with a defined device function. A value may indicate whether a device function is enabled or disabled. For example, a device function may comprise a power savings mode for a device, where a single bit set to a logical one (1) indicates a power savings mode is enabled and a logical zero (0) indicates a power savings mode is disabled. A value may also indicate an attribute or property for a device function that, when enabled, controls operations of a device function. For example, a power savings mode may have an attribute such as a defined time to remain in a power savings mode, where two bits provide 4 potential time intervals for the power savings mode (e.g., bit values 00 = 5ms, 01=10ms, 10=15ms, 11=20ms). Operational parameters 126-c and associated device functions may be stored in a data structure, such as a LUT, for example. Examples of operational parameters 126-c may include without limitation a modulation and coding scheme (MCS) parameter 126-1, a transmitter power parameter 126-2, a device power parameter 126-3, an antenna parameter 126-4, or an antenna configuration parameter 126-5. The embodiments are not limited to these examples.

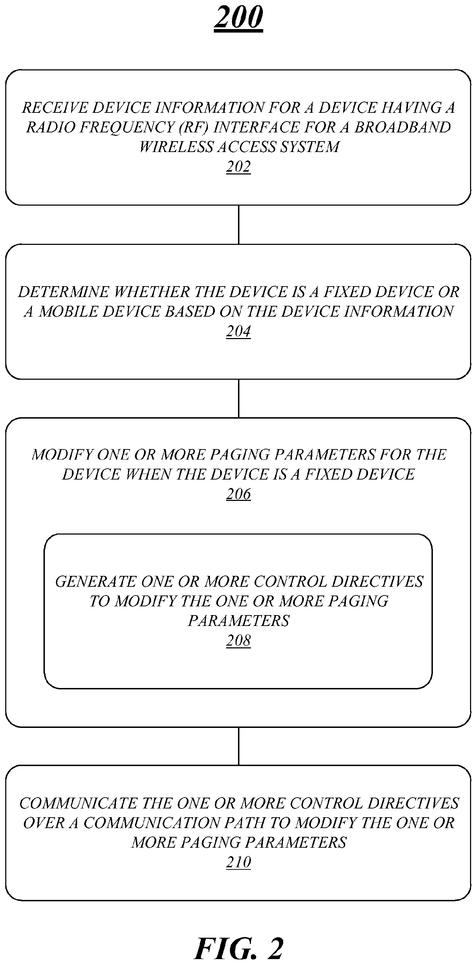

Some exemplary operations for the device identifier component 122-1, paging component 122-2 and/or the device manager component 122-3 when executed by the processor circuit 120 may be described with reference to FIGS. 2-5. However, the embodiments are not limited to these examples.

Included herein is a set of logic flows representative of exemplary methodologies for performing novel aspects of the disclosed architecture. While, for purposes of simplicity of explanation, the one or more methodologies shown herein are shown and described as a series of acts, those skilled in the art will understand and appreciate that the methodologies are not limited by the order of acts. Some acts may, in accordance therewith, occur in a different order and/or concurrently with other acts from that shown and described herein. For example, those skilled in the art will understand and appreciate that a methodology could alternatively be represented as a series of interrelated states or events, such as in a state diagram. Moreover, not all acts illustrated in a methodology may be required for a novel implementation.

A logic flow may be implemented in software, firmware, and/or hardware. In software and firmware embodiments, a logic flow may be implemented by computer executable instructions stored on a non-transitory computer readable medium or machine readable medium, such as an optical, magnetic or semiconductor storage. The embodiments are not limited in this context.

**FIG. 2** illustrates an embodiment of a logic flow 200. The logic flow 200 may be representative of some or all of the operations executed by one or more embodiments described herein, such as the apparatus 100. More particularly, the logic flow 200 may be implemented by the device identifier component 122-1 and/or the paging component 122-2.

In the illustrated embodiment shown in FIG. 2, the logic flow 200 may receive device information for a device having a radio frequency (RF) interface for a broadband wireless access system at block 202. For example, the apparatus 100 may receive device information 110 for a M2M device having an RF interface for a WMAN or LTE system. The device information 110 may comprise any descriptive information associated with the M2M device that is helpful in determining whether the M2M device is fixed or mobile. Examples of device information 110 may include without limitation device capabilities information, device locations, device locations over time, device functions, device identifiers, device names, device components, device sensor information (e.g., an accelerometer, altimeter, environmental, temperature, haptic, etc.), device telemetry, device received signal strength (RSS) or RSS indicator (RSSI), device power levels, device manual inputs, device user profiles, device control information, device data, and so forth. The embodiments are not limited in this context.

The logic flow 200 may determine whether the device is a fixed device or a mobile device based on the device information at block 204. For example, the device identifier component 122-1 may determine whether a M2M device is a fixed device based on the device information 110 using any number of techniques as previously described. The device identifier component 122-1 may output an indication that the M2M device is a fixed device to the paging component 122-2 and/or the device manager component 122-3.

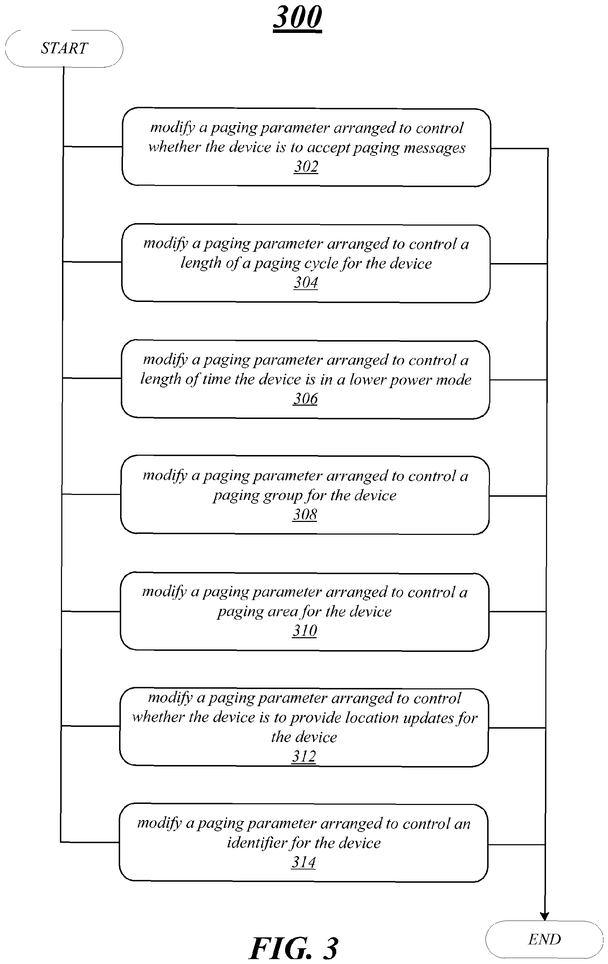

The logic flow 200 may modify one or more paging parameters for the device when the device is a fixed device at block 206. For example, the paging component 122-2 may receive the indication of a fixed device from the device identifier component 122-1, and modify one or more paging parameters 124-*b* for the device when the device is indicated as a fixed device. Prior to modifications, there may be a negotiation phase between devices, such as the M2M device and the base station or eNodeB, to determine precisely what modifications should be made. For instance, the M2M device may send device information 110 to a base station or eNodeB, including preferences for paging operations, and vice-versa. Examples of such modifications are described with reference to FIG. 3.

The logic flow 200 may generate one or more control directives to modify the one or more paging parameters at block 208. For example, the paging component 122-2 may modify the one or more paging parameters 124-*b* by generating one or more control directives 130-*d* to modify the one or more paging parameters 124-*b*. The control directives 130-*d* may provide instructions and values in a defined format to configure the paging parameters 124-*b*.

The logic flow 200 may communicate one or more control directives over a communication path to modify the one or more paging parameters at block 210. For example, the paging component 122-2 may communicate one or more control directives 130-*d* over a communication path to modify the one or more paging parameters. The communication path may be internal to a device, such as an internal bus, or external to a device, such as a RF communication path. The embodiments are not limited in this context.

Various components of apparatus 100 and a device implementing apparatus 100 may be communicatively coupled to each other by various types of communications media to coordinate operations. The coordination may involve the uni-directional or bidirectional exchange of information. For instance, the components may communicate information in the form of signals communicated over the communications media. The information can be implemented as signals allocated to various signal lines. In such allocations, each message is a signal. Further embodiments, however, may alternatively employ data messages. Such data messages may be sent across various connections. Exemplary connections include parallel interfaces, serial interfaces, and bus interfaces.

**FIG. 3** illustrates an embodiment of a logic flow 300. The logic flow 300 may be representative of some or all of the operations executed by one or more embodiments described herein, such as the paging component 122-2 of the apparatus 100, for example. More particularly, the logic flow 300 may be implemented by the paging component 122-2 to modify various types of paging parameters 124-*b* when a device is a fixed device.

In the illustrated embodiment show in FIG. 3, the logic flow 300 may modify a paging parameter arranged to control whether a device is to accept paging messages at block 302. For example, the paging component 122-2 may modify a paging state parameter 124-1 for a communications device and/or a communications system.

Some fixed devices do not need paging services. For example, a fixed M2M device, such as a parking meter, typically does not receive incoming messages. Rather, the fixed M2M device will contact the network when needed. In such cases, the paging component 122-2 may modify a paging state parameter 124-1 maintained in a base station or eNodeB to set this parameter to a value indicating that pages are not needed for the fixed M2M device. This effectively turns off paging services for the fixed M2M device, which in turn conserves radio resources for the network. The network may also release any device context information for the fixed M2M device, including network identifiers which are a scarce network resource. Since the fixed M2M device will not receive paging messages, the fixed M2M device may modify device operations, such as remaining in a lower power mode (e.g., idle mode) for extended periods of time until the fixed M2M device needs to re-connect to the network.

The logic flow 300 may modify a paging parameter arranged to control a length of a paging cycle for a device at block 304. For example, the paging component 122-2 may modify a paging cycle parameter 124-2 for a communications device and/or a communications system.

Some fixed devices only need limited paging services. For example, a fixed M2M device, such as an electricity usage meter, may receive incoming messages to retrieve readings from the electricity usage meter on an infrequent basis, such as once a month. In such cases, the paging component 122-2 may modify a paging cycle parameter 124-2 maintained in a base station or eNodeB to set this parameter to a value indicating a less frequent (e.g., longer) paging cycle relative to a mobile device. Any time granularity may be defined, such as days, week, months, years, or some other time period appropriate to a fixed M2M device. One or more 3GPP LTE Specifications and IEEE 802.16 Standards may need to be modified from a time scale of milliseconds to longer time scales in order to accommodate different time units used by a diversity of fixed M2M devices. In this manner, different paging cycle lengths may be assigned to different devices, such as fixed devices and mobile devices. Further, different paging cycle lengths may be assigned to different classes of fixed devices.

The logic flow 300 may modify a paging parameter arranged to control a length of time a device is to enter a lower power mode at block 306. For example, the paging component 122-2 may modify a discontinuous paging reception parameter 124-3 for a communications device.

After a certain period of inactivity by a device, the device transitions into a lower power state to conserve battery power and de-allocate radio resources. This is sometimes referred to as an idle mode. During idle mode, the device wakes up periodically for short intervals known as page listening intervals, and then becomes unavailable again in a pre-negotiated cycle. The longer the device can remain in idle mode, the more power savings the device can realize.

However, some fixed devices only need limited paging services, while other fixed devices do not need any paging services at all. In such cases, the paging component 122-2 may modify a discontinuous paging reception parameter 124-3 maintained in a fixed M2M device to set this parameter to a value indicating a longer idle mode duration. Any time granularity may be defined, such as days, week, months, years, or some other time period. One or more 3GPP LTE Specifications and IEEE 802.16 Standards may need to be modified from a time scale of milliseconds to longer time scales in order to accommodate different time units used by a diversity of fixed M2M devices. In one embodiment, the paging cycle parameter 124-2 and the discontinuous paging reception parameter 124-3 may be set to a same value.

In one embodiment, the paging cycle parameter 124-2 and the discontinuous paging reception parameter 124-3 may be set to a similar value to account for transmission latencies. In one embodiment, the paging cycle parameter 124-2 and the discontinuous paging reception parameter 124-3 may be set to completely different values. For example, the discontinuous paging reception parameter 124-3 may be set to a multiple of the paging cycle parameter 124-2 to remain in idle mode for longer periods of time.

The logic flow 300 may modify a paging parameter arranged to control a paging group for the device at block 308. For example, the paging component 122-2 may modify a paging group parameter 124-4 for a communications device and/or a communications system.

To conserve radio resources, paging is typically done on a group basis. Many devices share a same paging cycle and therefore are paged at a same time. A network may assign different fixed devices, or classes of fixed devices, a reserved set of group identifiers to distinguish them from other devices (e.g., mobile devices) and also assign them paging cycles as a group. This will enable other mobile devices to ignore any identifiers from the reserved set of group identifiers from a certain point, thereby saving unneeded processing and wake-up of devices not in the same group. To accomplish this, the paging component 122-2 may modify a paging group parameter 124-4 maintained in a base station, eNodeB, fixed M2M device, and/or other devices (e.g., mobile devices) to set this parameter to a value indicating a reserved paging group identifier.

The logic flow 300 may modify a paging parameter arranged to control a paging area for the device at block 310. For example, the paging component 122-2 may modify a paging area parameter 124-5 for a communications system.

Broadband wireless access systems use the concept of a tracking area that spans one or more physical locations called cells. When a device crosses to a new tracking area, the device reports it to the network. When the network receives an incoming call for the device, the network uses flood paging to all cells in the tracking area in an attempt to locate the device.

Fixed devices, however, do not change locations. Once the network is aware of a location for the fixed device, it can readily identify a cell in which the fixed device is located. In some cases, multiple cells may be associated with the fixed device, such as when the fixed device is within overlapping boundaries for the cells. In those cases where a fixed device needs paging services, the network may send the page within the proper cell(s). As such, once the paging component 122-2 is notified that a given device is a fixed device, the paging component 122-2 may modify a paging area parameter 124-5 maintained in a base station or eNodeB to set this parameter to a value indicating a particular cell and/or a location for the fixed device. This saves network bandwidth and improves network efficiency.

The logic flow 300 may modify a paging parameter arranged to control whether the device is to provide location updates for the device at block 312. For example, the paging component 122-2 may modify a paging update parameter 124-6 for a communications device and/or communications system.

As previously described, a device may transition into a lower power state referred to as an idle mode. During idle mode, the device wakes up periodically for short intervals known as page listening intervals, and then becomes unavailable again in a pre-negotiated cycle. During these intervals, the network can page the device to inform it of any incoming requests. The device can also re-synchronize to verify whether it has moved to a different network location during the idle period. If so, the device informs the network of the updated location.

Fixed devices, however, do not change locations. Once the network is aware of a location for the fixed device, it can readily identify a cell (or cells) in which the fixed device is located. As such, once the paging component 122-2 is notified of a location for a fixed device, the paging component 122-2 may modify a paging update parameter 124-6 maintained in a base station, eNodeB and/or the fixed device to set this parameter to a value indicating that location updates are not needed for the fixed device. This saves network bandwidth, improves network efficiency, reduces testing measures, and simplifies design of the fixed device.

The logic flow 300 may modify a paging parameter arranged to control an identifier for the device at block 314. For example, the paging component 122-2 may modify a paging identifier parameter 124-7 for a communications device and/or communications system.

Similar to a reserved set of group identifiers, the network may assign a fixed device an identifier from a reserve set of fixed device identifiers to distinguish a fixed device from other types of devices (e.g., mobile devices). Once the fixed device has an identifier, existing paging services or other network services may be customized for the fixed device, subsets of fixed devices (e.g., by type or class), or across an entire set of fixed devices. Further, future paging services or other network services may be introduced in a similar customized manner. To accomplish this, the paging component 122-2 may modify a paging identifier parameter 124-7 maintained in a base station, eNodeB, fixed M2M device, and/or other devices (e.g., mobile devices) to set this parameter to a value indicating a reserved fixed device identifier.

As an example of candidates for a paging identifier parameter 124-7, there are several radio network temporary identifiers defined in the 3GPP standards for various purposes. 16-bit radio network temporary identifiers (RNTIs) for the user equipment identity in a cell for a Radio Resource Control (RRC) connection, 16-bit Random Access-RNTI (RA-RNTI) for random access, 16-bit Paging-RNTI (P-RNTI) for paging, 16-bit System Information-RNTI (SI-RNTI) for system information message already exist. A specified portion of the cell-RNTI (C-RNTI) can be allocated for fixed devices. Namely, any device that has a C-RNTI from a certain portion can be identified as a fixed device. Similarly, a portion of the RA-RNTI, P-RNTI or SI-RNTI can be allocated to indicate that a device is a fixed device.

It may be appreciated that paging operations as controlled by the paging parameters 124-1 to 124-7 are merely a few examples of the type of paging operations that may be customized for fixed devices. Others exist as well, and the embodiments are not limited to these examples.

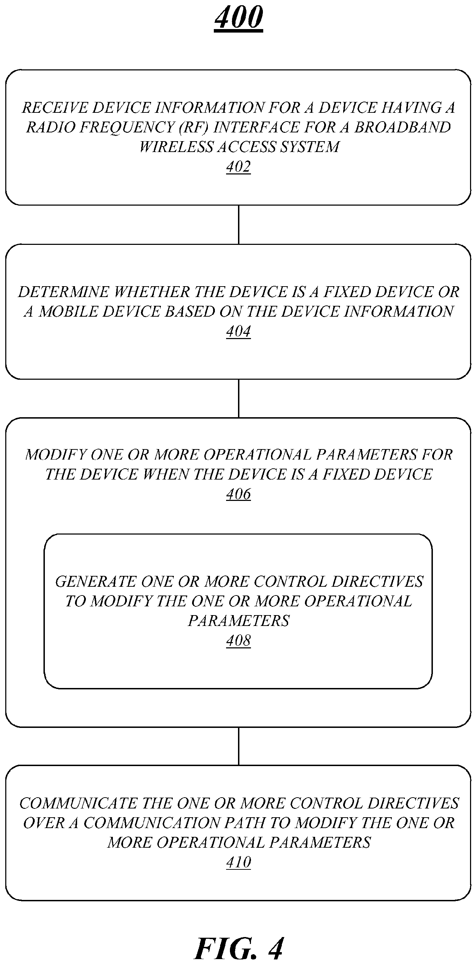

**FIG. 4** illustrates an embodiment of a logic flow 400. The logic flow 400 may be representative of some or all of the operations executed by one or more embodiments described herein, such as the apparatus 100, for example. More particularly, the logic flow 400 may be implemented by the device identifier component 122-1 and/or the device manager component 122-3.

In the illustrated embodiment shown in FIG. 4, the logic flow 400 may receive device information for a device having a radio frequency (RF) interface for a broadband wireless access network at block 402. Further, the logic flow 400 may determine whether the device is a fixed device or a mobile device based on the device information at block 404. These operations may be implemented in a same or similar manner as the examples given for blocks 302, 304 as described with reference to logic flow 300, among others.

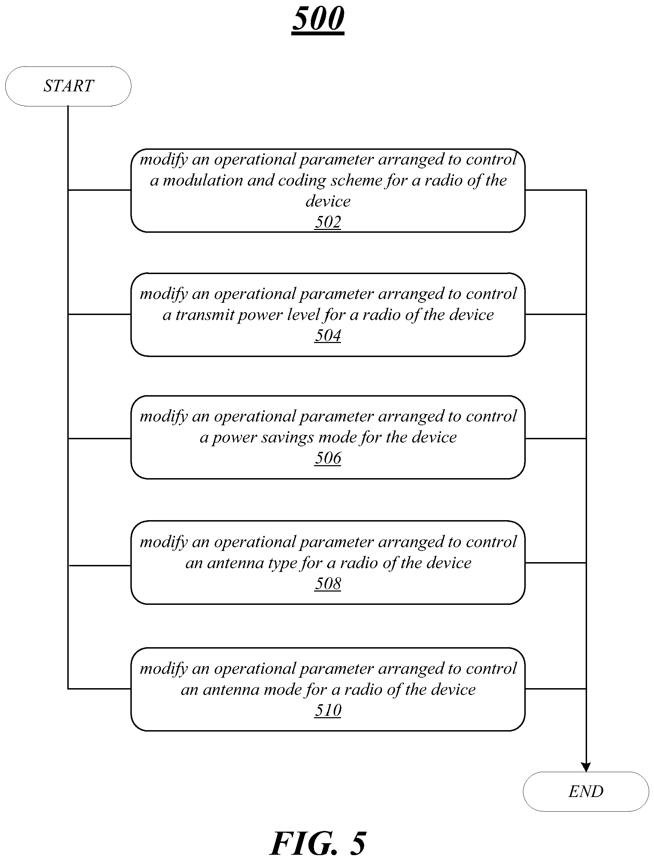

The logic flow 400 may modify one or more operational parameters for the device when the device is a fixed device at block 406. For example, the device manager component 122-3 may receive the indication of a fixed device from the device identifier component 122-1, and modify one or more operational parameters 126-c for the device when the device is indicated as a fixed device. In one embodiment, this may occur in addition to any modifications made to paging operations. In one embodiment, this may occur alternatively to any modifications made to paging operations. Prior to modifications, there may be a negotiation phase between devices, such as the M2M device and the base station or eNodeB, to determine precisely what modifications should be made. Examples of such modifications are described with reference to FIG. 5.

The logic flow 400 may generate one or more control directives to modify the one or more operational parameters at block 408. For example, the device manager component 122-3 may modify the one or more operational parameters 126-*c* by generating one or more control directives 132-*e* to modify the one or more operational parameters 126-*c*. The control directives 132-*e* may provide instructions and values in a defined format to configure the operational parameters 126-*c*.

The logic flow 400 may communicate one or more control directives over a communication path to modify the one or more operational parameters at block 410. For example, the device manager component 122-3 may communicate one or more control directives 132-*e* over a communication path to modify the one or more operational parameters 126-*c*. The communication path may be internal to a device, such as an internal bus, or external to a device, such as a RF communication path. The embodiments are not limited in this context.

**FIG. 5** illustrates an embodiment of a logic flow 500. The logic flow 500 may be representative of some or all of the operations executed by one or more embodiments described herein, such as the apparatus 100. More particularly, the logic flow 500 may be implemented by the device manager component 122-3 to modify various types of operational parameters 126-*c* when a device is a fixed device.

In the illustrated embodiment show in FIG. 5, the logic flow 500 may modify an operational parameter arranged to control a modulation and coding scheme (MCS) for a radio of the device at block 502. For example, the device manager component 122-3 may modify a MCS parameter 126-1 for a communications device and a communications system.

Modulation refers to a process of varying one or more properties of a highfrequency periodic waveform, called the carrier signal, with a modulating signal which typically contains information to be transmitted. Coding refers to a technique for controlling errors in data transmission over unreliable or noisy channels, such as forward error correction (FEC) or channel coding. Together they are referred to as a MCS. A communications system and a communications device typically utilize a same MCS based on a given set of channel conditions. However, mobile devices constantly change location, which in turn causes rapid changes in channel conditions. For example, a mobile device in a moving car that moves behind a building experiences significant changes in channel conditions due to multipath loss and fading caused by obstruction of wireless signals by the building. To solve this problem, some networks utilize link adaptation, or adaptive coding module (ACM). ACM is a term used in wireless communications to denote the matching of the MCS and other signal and protocol parameters to the changing conditions on the radio link, such as path loss, interference due to signals coming from other transmitters, sensitivity of a receiver, available transmitter power margin, and so forth.

Since fixed devices do not change location, fixed devices typically can use a lower modulation scheme relative to mobile device. For example, a fixed device may be capable of using a lower modulation scheme such as Quadrature Phase-Shift Keying (QPSK), using M = 4 symbols, while a mobile device may need a higher modulation scheme such as 8-Quadrature Amplitude Modulation (QAM) or 16-QAM. To accomplish this, the device manager component 122-3 may modify a MCS parameter 126-1 maintained in a base station, eNodeB, and fixed M2M device to set this parameter to a value indicating a given MCS. The network may start with a minimum MCS available to the network, and adjust to higher level MCS until a given quality metric is reached (e.g., a transmission rate, a bit error rate) or a maximum MCS is reached.

The logic flow 500 may modify an operational parameter arranged to control a transmit power level for a radio of the device at block 504. For example, the device manager component 122-3 may modify a transmitter power parameter 126-2 for a communication system.

Since fixed devices do not change location, a network transmitter at a base station or eNodeB can also use lower transmission power for a fixed device relative to a mobile device. For example, a network transmitter may utilize a transmission power of 27 dBm for a mobile device, while 24 dBm may work for a fixed device. As such, the device manager component 122-3 may modify a transmitter power parameter 126-2 maintained in a base station or eNodeB to set this parameter to a value indicating a given transmission power used by a base station or eNodeB transmitter. As with MCS adjustments, the network may start with a minimum transmission power level available to the network, and adjust to a higher transmission power level until a given quality metric is reached (e.g., a signal-to-noise ratio) or a maximum transmission power level is reached.

The logic flow 500 may modify an operational parameter arranged to control a power savings mode for the device at block 506. For example, the device manager component 122-3 may modify a device power parameter 126-3 for a communications device.

A communications device may have power management features allowing the communications device to enter various power saving modes. In one embodiment, for example, a communications device may implement power management in accordance with an Advanced Configuration and Power Interface (ACPI) specification. The ACPI specification defines at least four power states, including S1, S2, S3 and S4. In S1, all processor caches are flushed, processors stop executing instructions, and power is maintained for the processors and random access memory (RAM). In S2, the processors are powered off, and dirty cache is flushed to RAM. In S3, the device enters a sleep state, while RAM remains powered. In S4, the device enters a hibernation state, content of main memory is saved to non-volatile memory such as a hard drive, and powered down. These power states, and the ACPI specification, are merely examples, and many types of power management schemes may be used for a given communication device.

As previously described, a device may transition into a lower power state referred to as an idle mode. However, given that a fixed device may use longer paging cycles, and in some cases have no need for paging services at all, the fixed device may enter other power states lower than idle mode if implemented by the fixed device. The device manager component 122-3 may modify a device power parameter 126-3 maintained in a fixed M2M device to set this parameter to a value indicating a given power state used by the fixed M2M device when not connected to the network.

The logic flow 500 may modify an operational parameter arranged to control an antenna type for a radio of the device 508. For example, the device manager component 122-3 may modify an antenna parameter 126-4 for a communication device and/or a communication network.

A communication device may comprise various wireless interfaces and/or components to support wireless communication, such as one or more radios, transmitters, receivers, transceivers, chipsets, amplifiers, filters, control logic, network interface cards (NICs), antennas, antenna arrays, and so forth. Examples of an antenna may include, without limitation, an internal antenna, a directional antenna, an omni-directional antenna, a monopole antenna, a dipole antenna, an end fed antenna, a circularly polarized antenna, a micro-strip antenna, a diversity antenna, a dual antenna, an antenna array, and so forth. Certain communication devices may include smart antenna arrays of multiple antennas to implement various adaptive antenna techniques and spatial diversity techniques, such as multiple-input and multiple-output (MIMO).

Since a fixed device does not move, the network and the fixed device may use different types of antennas relative to mobile devices. For example, a mobile device may need smart antenna technology with multiple antennas to increase spectral efficiency (e.g., more bits per second per Hertz of bandwidth) or achieve a diversity gain that improves link reliability (e.g., reduces fading), while a fixed device may utilize a single antenna. The device manager component 122-3 may modify an antenna parameter 126-4 maintained in a base station, eNodeB, and fixed M2M device to set this parameter to a value indicating a given type of antenna used for a radio channel suitable for a fixed device.

The logic flow 500 may modify an operational parameter arranged to control an antenna mode for a radio of the device 510. For example, the device manager component 122-3 may modify an antenna configuration parameter 126-5 for a communications device and/or a communications network.

In addition to selecting a given antenna type for a fixed device, a network may select a particular configuration for an antenna type for the fixed device. For example, a smart antenna technology such as MIMO may have various configurable MIMO functions, such as precoding (e.g., multi-stream beamforming), spatial multiplexing, and diversity coding. In another example, multi-antenna MIMO may have degenerate modes, such as multiple-input and single-output (MISO), single-input and multiple-output (SIMO), and single-input single-output (SISO). The device manager component 122-3 may modify an antenna configuration parameter 126-5 maintained in a base station, eNodeB, and/or fixed M2M device to set this parameter to a value indicating a given type of antenna configuration used for a radio channel suitable for a fixed device.

It may be appreciated that device operations as controlled by the operational parameters 126-1 to 126-5 are merely a few examples of the type of device operations that may be customized for fixed devices. Others exist as well, and the embodiments are not limited to these examples.

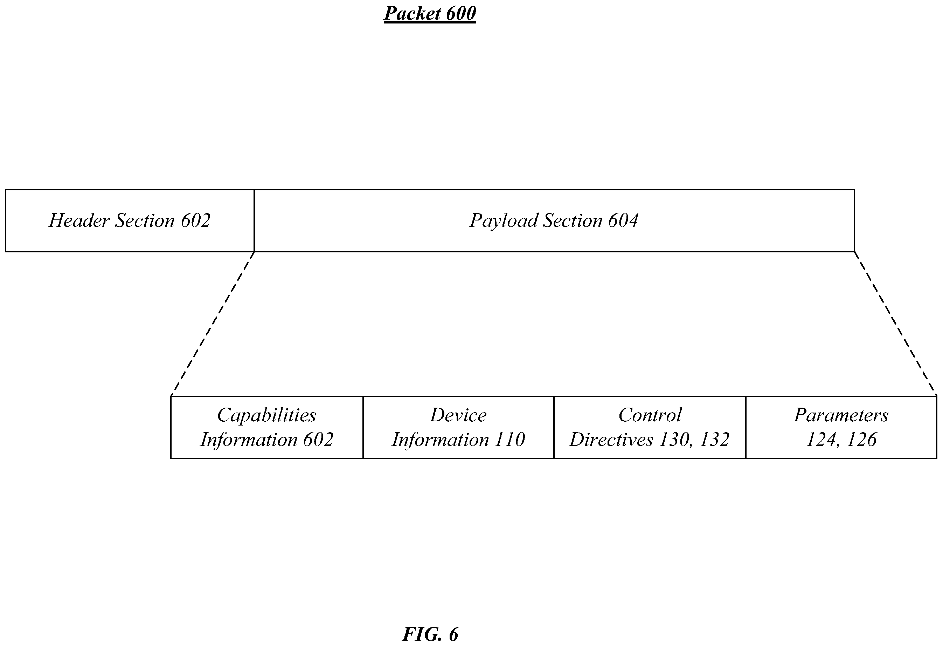

**FIG. 6** illustrates an embodiment of a packet 600. The packet 600 may illustrate a sample digital data transmission or packet data unit (PDU) suitable for a network to communicate control information for configuring a fixed device or a communications network for enhanced paging operations or device operations. In one embodiment, the packet 600 may be a media access control (MAC) PDU constructed in accordance with a 3GPP LTE system. In one embodiment, the packet 600 may be constructed with an IEEE 802.16 system. Other packet formats may be used as well.

In the illustrated embodiment shown in FIG. 6, the packet 600 may include a header section 602 with various type fields with encodings for PHY and/or MAC signaling header type, and a payload section 604 with payload data. The payload section 604 may include control information such as capabilities information 602, device information 110, control directives 130-*d*, 132-*e*, paging parameters 124-*b* and operational parameters 126-c, among other types of control information for configuring a fixed device or a communications network for enhanced paging operations or device operations. This may be advantageous when only a fixed device or a communications network implement apparatus 100, or when the fixed device and the communications network need to coordinate decision-making or synchronize changes.

Additionally or alternatively, the header section 602 may include information elements defined to convey some or all of the control information, such as capabilities information 602, device information 110, control directives 130-*d*, 132-*e*, paging parameters 124-*b* and operational parameters 126-*c*, among other types of control information for configuring a fixed device or a communications network for enhanced paging operations or device operations. The embodiments are not limited in this context.

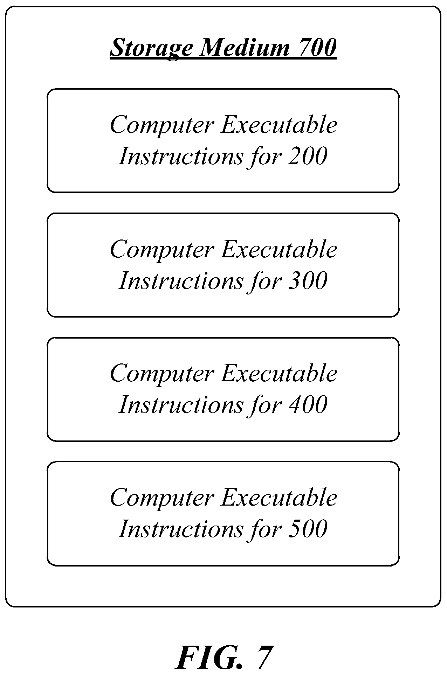

**FIG. 7** illustrates an embodiment of a storage medium 700. The storage medium 700 may comprise an article of manufacture. In one embodiment, the storage medium 700 may comprise any non-transitory computer readable medium or machine readable medium, such as an optical, magnetic or semiconductor storage. The storage medium may store various types of computer executable instructions, such as instructions to implement one or more of the logic flows 200, 300, 400 and/or 500. Examples of a computer readable or machine readable storage medium may include any tangible media capable of storing electronic data, including volatile memory or non-volatile memory, removable or non-removable memory, erasable or non-erasable memory, writeable or re-writeable memory, and so forth. Examples of computer executable instructions may include any suitable type of code, such as source code, compiled code, interpreted code, executable code, static code, dynamic code, object-oriented code, visual code, and the like. The embodiments are not limited in this context.

**FIG. 8** illustrates an embodiment of a device 800 for use in a broadband wireless access network. Device 800 may implement, for example, apparatus 100, storage medium 700 and/or a logic circuit 830. The logic circuit 830 may include physical circuits to perform operations described for apparatus 100. As shown in FIG. 8, device 800 may include a radio interface 810, baseband circuitry 820, and computing platform 830, although embodiments are not limited to this configuration.

The device 800 may implement some or all of the structure and/or operations for the apparatus 100, storage medium 700 and/or logic circuit 830 in a single computing entity, such as entirely within a single device. Alternatively, the device 800 may distribute portions of the structure and/or operations for the apparatus 100, storage medium 700 and/or logic circuit 830 across multiple computing entities using a distributed system architecture, such as a client-server architecture, a 3-tier architecture, an N-tier architecture, a tightly-coupled or clustered architecture, a peer-to-peer architecture, a master-slave architecture, a shared database architecture, and other types of distributed systems. The embodiments are not limited in this context.

In one embodiment, radio interface 810 may include a component or combination of components adapted for transmitting and/or receiving single carrier or multi-carrier modulated signals (e.g., including complementary code keying (CCK) and/or orthogonal frequency division multiplexing (OFDM) symbols) although the embodiments are not limited to any specific over-the-air interface or modulation scheme. Radio interface 810 may include, for example, a receiver 812, a transmitter 816 and/or a frequency synthesizer 814. Radio interface 810 may include bias controls, a crystal oscillator and/or one or more antennas 818-*f*. In another embodiment, radio interface 810 may use external voltage-controlled oscillators (VCOs), surface acoustic wave filters, intermediate frequency (IF) filters and/or RF filters, as desired. Due to the variety of potential RF interface designs an expansive description thereof is omitted.

Baseband circuitry 820 may communicate with radio interface 810 to process receive and/or transmit signals and may include, for example, an analog-to-digital converter 822 for down converting received signals, a digital-to-analog converter 824 for up converting signals for transmission. Further, baseband circuitry 820 may include a baseband or physical layer (PHY) processing circuit 856 for PHY link layer processing of respective receive/transmit signals. Baseband circuitry 820 may include, for example, a processing circuit 828 for medium access control (MAC)/data link layer processing. Baseband circuitry 820 may include a memory controller 832 for communicating with processing circuit 828 and/or a computing platform 830, for example, via one or more interfaces 834.

In some embodiments, PHY processing circuit 826 may include a frame construction and/or detection module, in combination with additional circuitry such as a buffer memory, to construct and/or deconstruct communication frames, such as packet 600. Alternatively or in addition, MAC processing circuit 828 may share processing for certain of these functions or perform these processes independent of PHY processing circuit 826. In some embodiments, MAC and PHY processing may be integrated into a single circuit.

The computing platform 830 may provide computing functionality for the device 800. As shown, the computing platform 830 may include a processing component 840. In addition to, or alternatively of, the baseband circuitry 820, the device 800 may execute processing operations or logic for the apparatus 100, storage medium 700, and logic circuit 830 using the processing component 830. The processing component 830 (and/or PHY 826 and/or MAC 828) may comprise various hardware elements, software elements, or a combination of both. Examples of hardware elements may include devices, logic devices, components, processors, microprocessors, circuits, processor circuits (e.g., processor circuit 120), circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), memory units, logic gates, registers, semiconductor device, chips, microchips, chip sets, and so forth. Examples of software elements may include software components, programs, applications, computer programs, application programs, system programs, software development programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Determining whether an embodiment is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given implementation.

The computing platform 830 may further include other platform components 850. Other platform components 850 include common computing elements, such as one or more processors, multi-core processors, co-processors, memory units, chipsets, controllers, peripherals, interfaces, oscillators, timing devices, video cards, audio cards, multimedia input/output (I/O) components (e.g., digital displays), power supplies, and so forth. Examples of memory units may include without limitation various types of computer readable and machine readable storage media in the form of one or more higher speed memory units, such as read-only memory (ROM), random-access memory (RAM), dynamic RAM (DRAM), Double-Data-Rate DRAM (DDRAM), synchronous DRAM (SDRAM), static RAM (SRAM), programmable ROM (PROM), erasable programmable ROM (EPROM), electrically erasable programmable ROM (EEPROM), flash memory, polymer memory such as ferroelectric polymer memory, ovonic memory, phase change or ferroelectric memory, silicon-oxide-nitride-oxide-silicon (SONOS) memory, magnetic or optical cards, an array of devices such as Redundant Array of Independent Disks (RAID) drives, solid state memory devices (e.g., USB memory, solid state drives (SSD) and any other type of storage media suitable for storing information.

Device 800 may be, for example, an ultra-mobile device, a mobile device, a fixed device, a machine-to-machine (M2M) device, a personal digital assistant (PDA), a mobile computing device, a smart phone, a telephone, a digital telephone, a cellular telephone, user equipment, eBook readers, a handset, a one-way pager, a two-way pager, a messaging device, a computer, a personal computer (PC), a desktop computer, a laptop computer, a notebook computer, a netbook computer, a handheld computer, a tablet computer, a server, a server array or server farm, a web server, a network server, an Internet server, a work station, a mini-computer, a main frame computer, a supercomputer, a network appliance, a web appliance, a distributed computing system, multiprocessor systems, processor-based systems, consumer electronics, programmable consumer electronics, game devices, television, digital television, set top box, wireless access point, base station, node B, subscriber station, mobile subscriber center, radio network controller, router, hub, gateway, bridge, switch, machine, or combination thereof. Accordingly, functions and/or specific configurations of device 800 described herein, may be included or omitted in various embodiments of device 800, as suitably desired. In some embodiments, device 800 may be configured to be compatible with protocols and frequencies associated one or more of the 3GPP LTE Specifications and/or IEEE 802.16 Standards for WMANs, and/or other broadband wireless networks, cited herein, although the embodiments are not limited in this respect.

Embodiments of device 800 may be implemented using single input single output (SISO) architectures. However, certain implementations may include multiple antennas (e.g., antennas 818-*f*) for transmission and/or reception using adaptive antenna techniques for beamforming or spatial division multiple access (SDMA) and/or using MIMO communication techniques.

The components and features of device 800 may be implemented using any combination of discrete circuitry, application specific integrated circuits (ASICs), logic gates and/or single chip architectures. Further, the features of device 800 may be implemented using microcontrollers, programmable logic arrays and/or microprocessors or any combination of the foregoing where suitably appropriate. It is noted that hardware, firmware and/or software elements may be collectively or individually referred to herein as "logic" or "circuit."

It should be appreciated that the exemplary device 800 shown in the block diagram of FIG. 8 may represent one functionally descriptive example of many potential implementations. Accordingly, division, omission or inclusion of block functions depicted in the accompanying figures does not infer that the hardware components, circuits, software and/or elements for implementing these functions would be necessarily be divided, omitted, or included in embodiments.

**FIG. 9** illustrates an embodiment of a broadband wireless access system 900. As shown in FIG. 9, broadband wireless access system 900 may be an internet protocol (IP) type network comprising an internet 910 type network or the like that is capable of supporting mobile wireless access and/or fixed wireless access to internet 910. In one or more embodiments, broadband wireless access system 900 may comprise any type of orthogonal frequency division multiple access (OFDMA) based wireless network, such as a system compliant with one or more of the 3GPP LTE Specifications and/or IEEE 802.16 Standards, and the scope of the claimed subject matter is not limited in these respects.

In the exemplary broadband wireless access system 900, access service networks (ASN) 914, 918 are capable of coupling with base stations (BS) 914, 920 (or (or eNodeB), respectively, to provide wireless communication between one or more fixed devices 916 and internet 110, or one or more mobile devices 922 and Internet 110. One example of a fixed device 916 and a mobile device 922 is device 800, with the fixed device 916 comprising a stationary version of device 800 and the mobile device 922 comprising a mobile version of device 800. ASN 912 may implement profiles that are capable of defining the mapping of network functions to one or more physical entities on broadband wireless access system 900. Base stations 914, 920 (or eNodeB) may comprise radio equipment to provide RF communication with fixed device 916 and mobile device 922, such as described with reference to device 800, and may comprise, for example, the PHY and MAC layer equipment in compliance with a 3GPP LTE Specification or an IEEE 802.16 Standard. Base stations 914, 920 (or eNodeB) may further comprise an IP backplane to couple to Internet 910 via ASN 912, 918, respectively, although the scope of the claimed subject matter is not limited in these respects.

Broadband wireless access system 900 may further comprise a visited connectivity service network (CSN) 924 capable of providing one or more network functions including but not limited to proxy and/or relay type functions, for example authentication, authorization and accounting (AAA) functions, dynamic host configuration protocol (DHCP) functions, or domain name service controls or the like, domain gateways such as public switched telephone network (PSTN) gateways or voice over internet protocol (VoIP) gateways, and/or internet protocol (IP) type server functions, or the like. However, these are merely example of the types of functions that are capable of being provided by visited CSN 924 or home CSN 926, and the scope of the claimed subject matter is not limited in these respects. Visited CSN 124 may be referred to as a visited CSN in the case where visited CSN 924 is not part of the regular service provider of fixed device 916 or mobile device 922, for example where fixed 916 or mobile device 922 is roaming away from their respective home CSN 926, or where broadband wireless access system 900 is part of the regular service provider of fixed device 916 or mobile device 922 but where broadband wireless access system 900 may be in another location or state that is not the main or home location of fixed device 916 or mobile device 922.

Fixed device 916 may be located anywhere within range of one or both base stations 914, 920, such as in or near a home or business to provide home or business customer broadband access to Internet 910 via base stations 914, 920 and ASN 912, 918, respectively, and home CSN 926. It is worthy to note that although fixed device 916 is generally disposed in a stationary location, it may be moved to different locations as needed. Mobile device 922 may be utilized at one or more locations if mobile device 922 is within range of one or both base stations 914, 920, for example.

In accordance with one or more embodiments, operation support system (OSS) 928 may be part of broadband wireless access system 900 to provide management functions for broadband wireless access system 900 and to provide interfaces between functional entities of broadband wireless access system 900. Broadband wireless access system 900 of FIG. 9 is merely one type of wireless network showing a certain number of the components of broadband wireless access system 900, and the scope of the claimed subject matter is not limited in these respects.

Some embodiments may be described using the expression "one embodiment" or "an embodiment" along with their derivatives. These terms mean that a particular feature, structure, or characteristic described in connection with the embodiment is included in at least one embodiment. The appearances of the phrase "in one embodiment" in various places in the specification are not necessarily all referring to the same embodiment.

Furthermore, in the following description and/or claims, the terms coupled and/or connected, along with their derivatives, may be used. In particular embodiments, connected may be used to indicate that two or more elements are in direct physical and/or electrical contact with each other. Coupled may mean that two or more elements are in direct physical and/or electrical contact. However, coupled may also mean that two or more elements may not be in direct contact with each other, but yet may still cooperate and/or interact with each other. For example, "coupled" may mean that two or more elements do not contact each other but are indirectly joined together via another element or intermediate elements.

In addition, the term "and/or" may mean "and," it may mean "or," it may mean "exclusive-or," it may mean "one," it may mean "some, but not all," it may mean "neither," and/or it may mean "both," although the scope of claimed subject matter is not limited in this respect. In the following description and/or claims, the terms "comprise" and "include," along with their derivatives, may be used and are intended as synonyms for each other.

It is emphasized that the Abstract of the Disclosure is provided to allow a reader to quickly ascertain the nature of the technical disclosure. It is submitted with the understanding that it will not be used to interpret or limit the scope or meaning of the claims. In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separate embodiment. In the appended claims, the terms "including" and "in which" are used as the plain-English equivalents of the respective terms "comprising" and "wherein," respectively. Moreover, the terms "first," "second," "third," and so forth, are used merely as labels, and are not intended to impose numerical requirements on their objects.

What has been described above includes examples of the disclosed architecture. It is, of course, not possible to describe every conceivable combination of components and/or methodologies, but one of ordinary skill in the art may recognize that many further combinations and permutations are possible. Accordingly, the novel architecture is intended to embrace all such alterations, modifications and variations that fall within the scope of the appended claims.

## Claims

1. A computer-implemented method to manage device parameters, comprising:
receiving (202) device information for a device having a radio frequency (RF) interface for a broadband wireless access system;
determining (204) whether the device is a fixed device or a mobile device based on the device information;
modifying (206) one or more paging parameters for the device when the device is a fixed device, wherein:
the modifying of the one or more paging parameters comprises modifying a paging parameter arranged to control whether the device is to accept paging messages.

2. The computer-implemented method of claim 1, comprising modifying a paging parameter arranged to control a length of time the device is to enter a lower power mode.

3. The computer-implemented method of any of claims 1 or 2, comprising modifying a paging parameter arranged to control a length of a paging cycle for the device.

4. The computer-implemented method of any of claims 1 to 3, comprising modifying a paging parameter arranged to control a paging group for the device.

5. The computer-implemented method of any of claims 1 to 4, comprising modifying a paging parameter arranged to control a paging area for the device.

6. The computer-implemented method of any of claims 1 to 5, comprising modifying a paging parameter arranged to control whether the device is to provide location updates for the device.

7. The computer-implemented method of any of claims 1 to 6, comprising modifying an operational parameter arranged to control a modulation and coding scheme for a radio of the device.

8. The computer-implemented method of any of claims 1 to 2, comprising modifying an operational parameter arranged to control a transmit power level for a radio of the device.

9. The computer-implemented method of any of claims 1 to 8, comprising modifying an operational parameter arranged to control an antenna type or an antenna mode for a radio of the device.

10. At least one machine readable medium comprising a plurality of instructions that in response to being executed on a computing device cause the computing device to carry out a method according to any one of claims 1-9.

11. An apparatus to manage device parameters, comprising:
a processor circuit (120);
a device identifier component (122-1) arranged for execution by the processor circuit to determine whether a device is a fixed device (916) or mobile device (922); and
a paging component (122-2) arranged for execution by the processor circuit to generate one or more control directives to modify one or more paging parameters (124) when the device is a fixed device, wherein:
the modifying of the one or more paging parameters comprises modifying a paging parameter arranged to control whether the device is to accept paging messages.

12. The apparatus of claim 11, the one or more paging parameters comprising a paging state parameter, a paging cycle parameter, a discontinuous paging reception parameter, a paging group parameter, a paging area parameter, a paging update parameter, and a paging identifier parameter.

13. The apparatus of claim 11 or 12, comprising a device manager component (122-3) arranged to generate one or more control directives (132) to modify one or more operational parameters (126) when the device is a fixed device.

14. The apparatus of any of claims 11 to 13, the one or more operational parameters comprising a modulation and coding scheme (MCS) parameter, a power parameter, an antenna parameter, or antenna configuration parameter.

## Patentansprüche

1. Computer-implementiertes Verfahren zum Verwalten von Parametern einer Vorrichtung, umfassend:
Empfangen (202) von Vorrichtungsinformationen für eine Vorrichtung mit Hochfrequenz (HF)-Schnittstelle für ein drahtloses Breitband-Zugangssystem;
Bestimmen (204), ob die Vorrichtung eine stationäre Vorrichtung oder eine mobile Vorrichtung ist, basierend auf den Vorrichtungsinformationen;
Modifizieren (206) eines oder mehrerer Paging-Parameter(s) für die Vorrichtung, wenn die Vorrichtung eine stationäre Vorrichtung ist, wobei:
das Modifizieren des einen oder der mehreren Paging-Parameter(s) umfasst, einen Paging-Parameter zu modifizieren, der dafür ausgelegt ist, zu steuern, ob die Vorrichtung Paging-Nachrichten akzeptiert.

2. Computer-implementiertes Verfahren nach Anspruch 1, umfassend, einen Paging-Parameter zu modifizieren, der dafür ausgelegt ist, eine Länge der Zeit zu steuern, für die die Vorrichtung in einen Niedrigenergiemodus schalten soll.

3. Computer-implementiertes Verfahren nach einem der Ansprüche 1 oder 2, umfassend, einen Paging-Parameter zu modifizieren, der dafür ausgelegt ist, eine Länge eines Paging-Zyklus für die Vorrichtung zu steuern.

4. Computer-implementiertes Verfahren nach einem der Ansprüche 1 bis 3, umfassend, einen Paging-Parameter zu modifizieren, der dafür ausgelegt ist, eine Paging-Gruppe für die Vorrichtung zu steuern.

5. Computer-implementiertes Verfahren nach einem der Ansprüche 1 bis 4, umfassend, einen Paging-Parameter zu modifizieren, der dafür ausgelegt ist, einen Paging-Bereich für die Vorrichtung zu steuern.

6. Computer-implementiertes Verfahren nach einem der Ansprüche 1 bis 5, umfassend, einen Paging-Parameter zu modifizieren, der dafür ausgelegt ist, zu steuern, ob die Vorrichtung Standortaktualisierungen für die Vorrichtung bereitstellt.

7. Computer-implementiertes Verfahren nach einem der Ansprüche 1 bis 6, umfassend, einen Betriebsparameter zu modifizieren, der dafür ausgelegt ist, ein Modulations- und Codierschema für eine Funkeinheit der Vorrichtung zu steuern.

8. Computer-implementiertes Verfahren nach einem der Ansprüche 1 bis 2, umfassend, einen Betriebsparameter zu modifizieren, der dafür ausgelegt ist, einen Sendeleistungspegel für eine Funkeinheit der Vorrichtung zu steuern.

9. Computer-implementiertes Verfahren nach einem der Ansprüche 1 bis 8, umfassend, einen Betriebsparameter zu modifizieren, der dafür ausgelegt ist, einen Antennentyp oder einen Antennenmodus für eine Funkeinheit der Vorrichtung zu steuern.

10. Wenigstens ein maschinenlesbares Medium, umfassend mehrere Anweisungen, die in Reaktion auf die Ausführung auf einer Rechenvorrichtung bewirken, dass die Rechenvorrichtung ein Verfahren gemäß einem der Ansprüche 1-9 ausführt.

11. Vorrichtung zum Verwalten von Parametern einer Vorrichtung, umfassend:
eine Prozessorschaltung (120);
eine Vorrichtungskennkomponente (122-1), die zur Ausführung durch die Prozessorschaltung ausgelegt ist, um zu bestimmen, ob eine Vorrichtung eine stationäre Vorrichtung (916) oder eine mobile Vorrichtung (922) ist; und
eine Paging-Komponente (122-2), die dafür ausgelegt ist, von der Prozessorschaltung ausgeführt zu werden, um eine oder mehrere Steuerungsrichtlinien zu erzeugen, um einen oder mehrere Paging-Parameter (124) zu modifizieren, wenn die Vorrichtung eine stationäre Vorrichtung ist, wobei:
das Modifizieren des einen oder der mehreren Paging-Parameter(s) umfasst, einen Paging-Parameter zu modifizieren, der dafür ausgelegt ist, zu steuern, ob die Vorrichtung Paging-Nachrichten akzeptieren soll.

12. Vorrichtung nach Anspruch 11, wobei der eine oder die mehreren Paging-Parameter einen Paging-Zustandsparameter, einen Paging-Zyklusparameter, einen Parameter für diskontinuierlichen Paging-Empfang, einen Paging-Gruppenparameter, einen Paging-Bereichsparameter, einen Paging-Aktualisierungsparameter und einen Paging-Kennungsparameter umfassen.

13. Vorrichtung nach Anspruch 11 oder 12, umfassend eine Vorrichtungsmanager-Komponente (122-3), die dafür ausgelegt ist, eine oder mehrere Steuerungsrichtlinien (132) zu erzeugen, um einen oder mehrere Betriebsparameter (126) zu modifizieren, wenn die Vorrichtung eine stationäre Vorrichtung ist.

14. Vorrichtung nach einem der Ansprüche 11 bis 13, wobei der eine oder die mehreren Betriebsparameter einen Modulations- und Codierschema(MCS)-Parameter, einen Leistungsparameter, einen Antennenparameter oder einen Antennenkonfigurationsparameter umfassen.

## Revendications

1. Procédé mis en oeuvre par ordinateur pour gérer des paramètres de dispositif, comprenant les opérations consistant à :
recevoir (202) des informations de dispositif pour un dispositif ayant une interface de radiofréquence (RF) pour un système d'accès sans fil en bande large ;
déterminer (204) si le dispositif est un dispositif fixe ou un dispositif mobile, sur la base des informations de dispositif ;
modifier (206) un ou plusieurs paramètres de radiomessagerie pour le dispositif lorsque le dispositif est un dispositif fixe, cas dans lequel :
la modification dudit un ou de plusieurs paramètres de radiomessagerie comprend la modification d'un paramètre de radiomessagerie agencé de façon à contrôler si le dispositif est censé accepter des messages de radiomessagerie.

2. Procédé mis en oeuvre par ordinateur selon la revendication 1, comprenant la modification d'un paramètre de radiomessagerie agencé de façon à contrôler une longueur de temps pour que le dispositif entre dans un mode de puissance plus faible.

3. Procédé mis en oeuvre par ordinateur selon l'une quelconque des revendications 1 ou 2, comprenant la modification d'un paramètre de radiomessagerie agencé de façon à contrôler une longueur d'un cycle de radiomessagerie pour le dispositif.

4. Procédé mis en oeuvre par ordinateur selon l'une quelconque des revendications 1 à 3, comprenant la modification d'un paramètre de radiomessagerie agencé de façon à contrôler un groupe de radiomessagerie pour le dispositif.

5. Procédé mis en oeuvre par ordinateur selon l'une quelconque des revendications 1 à 4, comprenant la modification d'un paramètre de radiomessagerie agencé de façon à contrôler une zone de radiomessagerie pour le dispositif.

6. Procédé mis en oeuvre par ordinateur selon l'une quelconque des revendications 1 à 5, comprenant la modification d'un paramètre de radiomessagerie agencé de façon à contrôler si le dispositif est censé offrir des mises à jour de localisation pour le dispositif.

7. Procédé mis en oeuvre par ordinateur selon l'une quelconque des revendications 1 à 6, comprenant la modification d'un paramètre opérationnel agencé de façon à contrôler un schéma de modulation et de codage pour une radio du dispositif.

8. Procédé mis en oeuvre par ordinateur selon l'une quelconque des revendications 1 à 2, comprenant la modification d'un paramètre opérationnel agencé de façon à contrôler un niveau de puissance d'émission pour une radio du dispositif.

9. Procédé mis en oeuvre par ordinateur selon l'une quelconque des revendications 1 à 8, comprenant la modification d'un paramètre opérationnel agencé de façon à contrôler un type d'antenne ou un mode d'antenne pour une radio du dispositif.

10. Au moins un support lisible par une machine comprenant une pluralité d'instructions qui, en réaction au fait qu'elles sont exécutées sur un dispositif informatique, amènent le dispositif informatique à réaliser un procédé selon l'une quelconque des revendications 1 à 9.

11. Appareil destiné à gérer des paramètres de dispositif, comprenant :
un circuit de processeur (120) ;
un composant d'identification de dispositif (122-1) agencé pour une exécution par le circuit de processeur afin de déterminer si un dispositif est un dispositif fixe (916) ou un dispositif mobile (922) ; et
un composant de radiomessagerie (122-2) agencé pour une exécution par le circuit de processeur afin de générer une ou plusieurs directives de contrôle destinées à modifier un ou plusieurs paramètres de radiomessagerie (124) lorsque le dispositif est un dispositif fixe, cas dans lequel :
la modification dudit un ou de plusieurs paramètres de radiomessagerie comprend la modification d'un paramètre de radiomessagerie agencé de façon à contrôler si le dispositif est censé accepter des messages de radiomessagerie.

12. Appareil selon la revendication 11, ledit un ou plusieurs paramètres de radiomessagerie comprenant un paramètre d'état de radiomessagerie, un paramètre de cycle de radiomessagerie, un paramètre de réception discontinue de radiomessagerie, un paramètre de groupe de radiomessagerie, un paramètre de zone de radiomessagerie, un paramètre de mise à jour de radiomessagerie, et un paramètre d'identification de radiomessagerie.

13. Appareil selon la revendication 11 ou 12, comprenant un composant gestionnaire de dispositif (122-3) agencé de façon à générer une ou plusieurs directives de contrôle (132) afin de modifier un ou plusieurs paramètres opérationnels (126) lorsque le dispositif est un dispositif fixe.

14. Appareil selon l'une quelconque des revendications 11 à 13, ledit un ou plusieurs paramètres opérationnels comprenant un paramètre de schéma de modulation et de codage (MCS), un paramètre de puissance, un paramètre d'antenne, ou un paramètre de configuration d'antenne.
